# EUROPÄISCHE PATENTSCHRIFT

(11) **EP 0 363 890 B1**
(45) Veröffentlichungstag und Bekanntmachung des Hinweises auf die Patenterteilung: **27.07.1994**
(21) Anmeldenummer: 89118777.5
(22) Anmeldetag: 10.10.1989
(51) Int. Cl.: G05B 19/04

(54) **Verfahren und Vorrichtung zum Betrieb einer Schaltungsanordnung**
Method and device for operating a switching device
Méthode et dispositif de fonctionnement d'une disposition de distribution

(30) Priorität: 12.10.1988 DE 3834695
(43) Veröffentlichungstag der Anmeldung: 18.04.1990
(73) Patentinhaber: HONEYWELL AG, 63067 Offenbach (DE)
(72) Erfinder: Riewe, Franz-Jürgen, D-6458 Rodenbach (DE)
(74) Vertreter: Herzbach, Dieter, Dipl.-Ing.

(56) Entgegenhaltungen:
- DE-A- 3 246 320
- US-A- 4 104 724

## Beschreibung

Die vorliegende Erfindung bezieht sich auf ein Verfahren zum Betrieb einer Schaltungsanordnung nach dem Gattungsbegriff des Patentanspruches 1 sowie auf eine Vorrichtung zur Durchführung dieses Verfahrens.

Oftmals besteht die Aufgabe, hochempfindliche Messungen z.B. die Abfrage von Sensoren durchzuführen, wobei im Meßsystem befindliche Leistungsteile wie z.B. Spannungs-Schaltwandler Störungen hervorrufen und die kleinen Signalspannungen verfälschen können. Abschirmungen und ähnliche Maßnahmen führen hier aufgrund der räumlichen Enge der Systemkomponenten nur bedingt zum Erfolg.

Aus der DE-PS 32 46 320 ist bereits ein nach dem Sperrwandlerprinzip arbeitender Gleichspannungswandler bekannt, der nur dann eingeschaltet wird, wenn die auf einem Speicherkondensator befindliche Ladung einen vorgegebenen Referenzwert unterschreitet. Hierbei ist allerdings nicht gewährleistet, daß bei der zyklischen Sensorabfrage in einem Meßsystem, der Sperrwandler gerade dann abgeschaltet ist, wenn die Sensorabfrage erfolgt, da die Zu- und Abschaltung des Sperrwandlers dort durch die Größe des Speicherkondensators, den Stromverbrauch der angeschlossenen Schaltung und die zulässige Hysterese in bezug auf den Referenzwert diktiert wird.

Es ist daher die Aufgabe der vorliegenden Erfindung, ein Verfahren anzugeben, bei dem sichergestellt ist, daß die Meßsignale bei ihrer Abfrage durch systembedingte Störsignale nicht verfälscht werden. Die Lösung dieser Aufgabe gelingt gemäß den kennzeichnenden Merkmalen des Patentanspruches 1. Weitere vorteilhafte Ausgestaltungen des erfindungsgemäßen Verfahrens sowie eine Vorrichtung zur Durchführung des Verfahrens sind den Unteransprüchen entnehmbar.

Das erfindungsgemäße Verfahren sieht bei einer zyklischen Sensorabfrage durch eine Elektronik, insbesondere durch einen Mikroprozessor vor, diesen in das Spannungsmanagement des Schaltwandlers einzubeziehen und jeweils vor einer Sensorabfrage den Schaltwandler für die kurze Zeit der Abfrage zu sperren und sofort nach der Abfrage wieder freizugeben. Dadurch wird eine bestmögliche Störunterdrückung erreicht. Für den Fall, daß ein Mikroprozessor selbst die Spannungswandlung steuert, kann das erfindungsgemäße Verfahren über Software realisiert werden. Im anderen Fall muß der Mikroprozessor über einen Port Eingriff in den Spannungswandler nehmen und diesen sperren. Vorzugsweise kann der Mikroprozessor die Sensorabfrage in die ohnehin vorhandenen Abschaltphasen des Schaltwandlers legen.

Anhand der Figuren der beiliegenden Zeichnung sei im folgenden das erfindungsgemäße Verfahren sowie ein Ausführungsbeispiel zur Durchführung dieses Verfahrens beschrieben. Es zeigen:
- Fig.1: ein Blockschaltbild des erfindungsgemäßen Prinzips; und
- Fig.2: eine teilweise bekannte Sperrwandlerschaltung, die durch eine erfindungsgemäße Schaltungsvorrichtung ergänzt wurde.

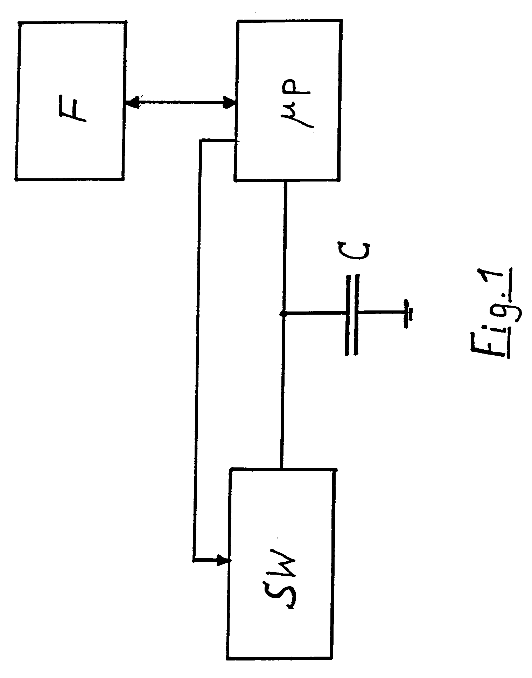

Gemäß Fig. 1 erzeugt ein Schaltwandler SW, der beispielsweise in Form eines Durchflußwandlers, eines Sperrwandlers oder eines Gegentaktwandlers realisiert sein kann, aus einer internen nicht-dargestellten Batteriespannung, eine Versorgungsspannung, die durch einen Speicherkondensator C gepuffert wird und der Speisung einer nachgeschalteten Elektronik, vorzugsweise eines Mikroprozessors µp dient. Der Mikroprozessor µp fragt in zyklischen Abständen einen oder mehrere Sensoren F ab, um anschließend die abgefragten Sensorsignale gemäß vorgegebener Algorithmen zu bearbeiten. Bevor er jedoch die Abfrage dieser Sensorsignale jeweils startet, gibt er über eine getrennte Leitung an den Schaltwandler SW ein Signal aus, wodurch dessen Betrieb unterbrochen wird. Während dieser Zeit erfolgt keine Nachladung des Speicherkondensators C und der Mikroprozessor p wird über die gepufferte Spannung betrieben. Auf diese Weise ist sichergestellt, daß irgendwelche Störspannungsspitzen des Schaltwandlers SW den Sensorsignalen nicht überlagert werden.

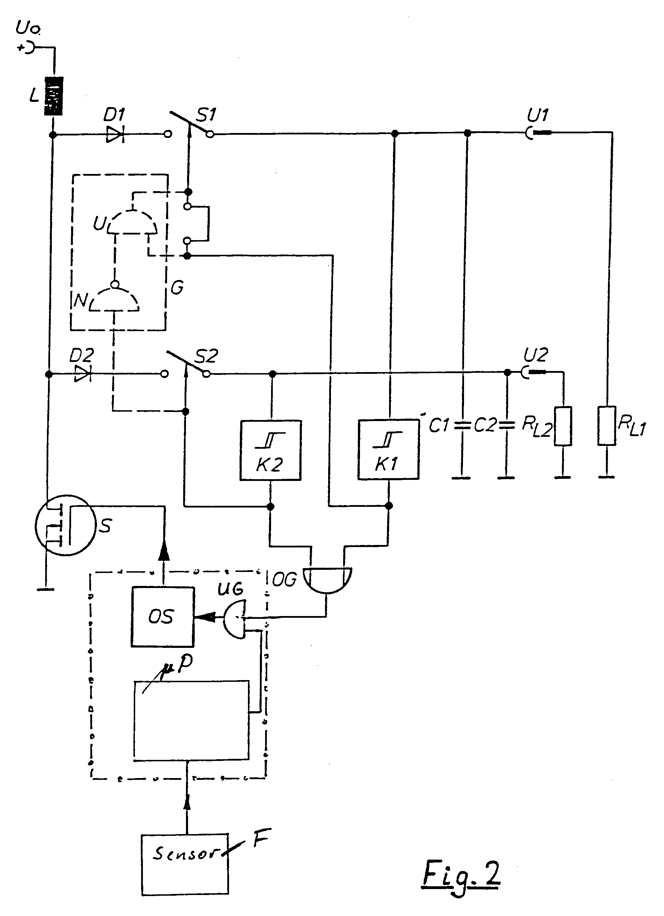

Figur 2 zeigt eine Schaltungsanordnung, die teilweise mit derjenigen identisch ist, wie sie in der DE-PS 32 46 320 dargestellt und beschrieben ist. Diese Schaltungsanordnung wurde jedoch um die erfindungsgemäße Schaltungsanordnung ergänzt. Gemäß Figur 2 ist eine Spule L einerseits an eine Batteriespannung +Uₒ und andererseits über einen Schalter S an Masse gelegt. Der Schalter S besteht aus einem VMOS-Schalttransistor und wird im Bedarfsfall periodisch von einem Oszillator OS betätigt. Der Schaltungspunkt zwischen Spule L und Schalter S ist an einen ersten Ladekreis und wenigstens einen weiteren Ladekreis angeschlossen. Der erste Ladekreis weist eine Diode D1, eine hierzu in Reihe geschalteten Schalter S1 sowie einen einerseits an dem Schalter S1 und andererseits an Masse liegenden Speicherkondensator C1 auf. Über dem Speicherkondensator C1 bildet sich eine Spannung U1, und der Speicherkondensator C1 kann über einen parallelgeschalteten Lastwiderstand R_{L1} entladen werden.

In gleicher Weise weist der zweite Ladekreis eine Diode D2 einen hierzu in Reihe geschalteten Schalter S2 sowie einen Speicherkondensator C2 auf, der einerseits an den Schalter S2 und andererseits an Masse angeschlossen ist. Über dem Speicherkondensator C2 bildet sich eine Spannung U2 und ein Lastwiderstand R_{L2} entlädt der Speicherkondensator C2.

Es sei davon ausgegangen daß die Spannung U2 größer als die Spannung U1 ist. Zwei Komparatoren bzw. Überwachungsschaltungen K1 und K2 sind an die Speicherkondensatoren C1 und C2 angeschlossen und überwachen deren Spannungen U1 und U2 in der Weise, daß sie ein L-Ausgangssignal immer dann erzeugen, wenn die Spannung U1 bzw. U2 unter einen vorgegebenen Schwellwert fällt. Die Ausgangssignale der beiden Komparatoren K1 und K2 werden über ein ODER-Gatter OG verknüpft. Ferner ist das Ausgangssignal des Komparators K1 auf den Schalter S1 geführt und das Ausgangssignal des Komparators K2 ist auf den Schalter S2 geführt. Die L-Ausgangssignale der Komparatoren K1 bzw. K2 bewirken daher ein Schließen der Schalter S1 bzw. S2. Der Schalter S2 kann in dem Fall entfallen, wo die Erhöhung der niedrigeren Spannung U1 Vorrang genießt. Bei geschlossenem Schalter S1 fließt ohnehin kein Strom über die Diode D2, wenn U2 größer als U1 ist.

Wenn beide Komparatoren K1 und K2 ein Nachladen der von ihnen überwachten Spannungen U1 und U2 anfordern, so sind beide Schalter S1 und S2 geschlossen. Da vereinbarungsgemäß aber U1 kleiner als U2 sein soll, wird der Kondensator C1 vorrangig nachgeladen. Erst wenn der Kondensator C1 seine vorbestimmte Spannung U1 erreicht hat, wird über den Komparator K1 der Schalter S1 aufgetrennt, so daß danach der Kondensator C2 nachgeladen werden kann. Will man der höheren Spannung U2 Vorrang geben, so kann dies durch eine einfache Logikschaltung G berücksichtigt werden. Diese Logikschaltung ist gestrichelt eingezeichnet und umfaßt einen Inverter N, der das Ausgangssignal des Komparators K2 negiert, sowie ein UND-Gatter U, dem das Ausgangssignal des Komparators K1 und das negierte Ausgangssignal des Komparators K2 zugeführt wird. Betätigt man mit dem Ausgangssignal des UND-Gatters U den Schalter S1, so kann dieser nur geschlossen werden, wenn das Ausgangssignal des Komparators K2 nicht vorliegt und somit der Schalter S2 geöffnet ist. Die direkte Beeinflussung des Schalters S1 durch den Komparator K1 muß in diesem Fall unterbunden werden. Dies kann durch Entfernen der dargestellten Brücke geschehen.

Soweit die Schaltung bis hierhin beschrieben wurde, gehört sie zum Stand der Technik. Bei der bekannten Schaltung werden die beiden Ausgangssignale der Komparatoren K1 und K2 über das ODER-Gatter OG verknüpft, und der Ausgang des ODER-Gatters OG steuert im bekannten Fall den Oszillator OS an, so daß dieser immer schwingt, wenn einer der beiden Komparatoren K1 bzw. K2 ein L-Ausgangssignal liefert.

Bei der abgewandelten Schaltung ist nunmehr zwischen den Ausgang des ODER-Gatters OG und den Eingang des Oszillators OS ein UND-Gatter UG geschaltet, dessen erstem Eingang der Ausgang des ODER-Gatters OG zugeführt wird und dessen zweiter Eingang an einen Ausgang eines Mikroprozessors µp angeschlossen ist. Der Mikroprozessor µp ist seinerseits über eine oder Mehrere Abfrageleitungen mit einem oder mehreren Sensoren F verbunden, und er liefert an dem mit dem UND-Gatter UG verbundenen Ausgang immer dann ein L-Ausgangssignal, wenn keine Abfrage der Sensoren F erfolgt. Lediglich unmittelbar vor Abfrage der Sensoren F wird das L-Ausgangssignal auf ein Null-Ausgangssignal umgeschaltet. Dadurch sperrt das UND-Gatter UG unabhängig davon, ob einer der beiden Komparatoren K1 bzw. K2 eine Nachladung der Speicherkondensatoren C1 bzw. C2 anfordert, den Oszillator OS, so daß der Schalter S nicht weiter rhythmisch betätigt wird. Auf diese Weise ist sichergestellt, daß während der Abfrage der Sensoren F keine Störspannungen durch den Sperrwandler erzeugt werden.

Das ODER-Gatter OG, das UND-Gatter UG und der Oszillator OS können auch softwaremäßig in dem Mikroprozessor µp realisiert sein. In dem Fall würde der Mikroprozessor µp über einen Port den Schalter S ansteuern und die Signale der Komparatoren K1 und K2 würden dem Mikroprozessor über weitere Ports zugeführt.

Es liegt auf der Hand, daß bei der Schaltungsanordnung gemäß Figur 2 die Speicherkondensatoren C1 und C2 nicht nur der Speisung der angeschlossenen Lastkreise R_{L1} und R_{L2} dienen, sondern daß die Speisespannungen dieser Speicherkondensatoren ebenso für die Speisung der strichpunktiert eingerahmten Elektronik herangezogen werden können.

## Patentansprüche

1. Verfahren zum Betrieb eines Schaltwandlers, dessen gewandeltes Spannungssignal wenigstens einem Pufferkondensator zugeführt und dessen Betrieb unterbrochen wird, wenn die an dem Pufferkondensator anliegende Spannung einen vorgegebenen Wert übersteigt, **dadurch gekennzeichnet,** daß, bei Speisung einer Sensorsignale zyklisch abfragenden elektronischen Steuereinheit mit der an dem Pufferkondensator anliegenden Spannung, der Betrieb des Schaltwandlers zusätzlich kurz vor und während der Abfrage der Sensorsignale unterbrochen wird.

2. Vorrichtung mit einem Schaltwandler, der einen von einem Oszillator (OS) getakteten Schalter (S) und eine in Reihe geschaltete Spule (L) aufweist, wobei diese Reihenschaltung mit Gleichspannung betrieben wird und der gemeinsame Schaltungspunkt von Spule und Schalter über wenigstens eine Diode (D1,D2) an wenigstens einen eine Versorgungsspannung liefernden Pufferkondensator (C1,C2) angeschlossen ist, **gekennzeichnet durch** eine an die Versorgungsspannung angeschlossene elektronische Steuereinheit (µp) für die Abfrage von Sensoren (F) und ein Gatter (UG), das von der elektronischen Steuereinheit (µp) bei der Abfrage von Sensoren ein Signal zugeführt erhält, um den den Schalter (S) taktenden Oszillator (OS) zusätzlich Kurz vor und während der Abfrage der Sensorsignale zu sperren.

3. Vorrichtung nach Anspruch 2, bei der die Ausgänge mehrerer die Ladungen mehrerer Pufferkondensatoren (C1,C2) überwachender Komparatoren (K1,K2) über ein ODER-Gatter (OG) zusammengefaßt sind, **dadurch gekennzeichnet,** daß das Gatter ein UND-Gatter (UG) mit zwei Eingängen ist und daß dem anderen Eingang des UND-Gatters der Ausgang des ODER-Gatters (OG) zugeführt wird.

4. Vorrichtung nach Anspruch 3, **dadurch gekennzeichnet,** daß das ODER-Gatter (OG), das UND-Gatter (UG) und der Oszillator (OS) mittels Software in dem Mikroprozessor (up) realisiert sind.

## Claims

1. Method for operating a switching transformer, the transformed voltage signal of which being fed at least to a buffer capacitor and the operation of which being interrupted in the event where the voltage across the buffer capacitor exceeds a predetermined value, **characterized in that** at feeding of a control unit, which is cyclically interrogating sensor signals, with said voltage across the buffer capacitor, the operation of the switching transformer additionally is interrupted shortly before and during interrogation of the sensor signals.

2. Device including a switching transformer, which comprises a switch (S) clocked by an oscillator (OS) and an inductive coil (L) arranged in series to it, whereat this series circuit is operated by a DC voltage and the circuit node common to the coil and the switch is connected via at least a diode (D1,D2) to at least a capacitor (C1,C2) delivering a supply voltage, **characterized by** an electronic control unit (µp) connected to the supply voltage for the interrogation of sensors (F) and by a gate (UG), to which a signal is fed from the electronic control unit (µp) at the interrogation of sensors in order to additionally inhibit the oscillator (OS) which is clocking the switch (S) shortly before and during the interrogation of the sensor signals.

3. Device according to claim 2 at which the outputs of a plurality of comparators (K1,K2) monitoring the charges of a plurality of buffer capacitors (C1,C2) are connected to an OR-gate (OG), **characterized in that** said gate is an AND-gate (UG) having two inputs and that to the other input of said AND-gate the output of said OR-gate (OG) is fed.

4. Device according to claim 3, **characterized in that** the OR-gate (OG), the AND-gate (UG) and the oscillator (OS) are implemented by means of software within said microprocessor (µp).

## Revendications

1. Procédé pour l'exploitation d'un convertisseur de commutation, dont le signal de tension converti est amené à au moins un condensateur tampon, et dont l'exploitation est interrompue lorsque la tension aux bornes du condensateur tampon dépasse une valeur définie à l'avance, caractérisé en ce que lors de l'alimentation, avec la tension existant aux bornes du condensateur tampon, d'une unité de commande électronique explorant de manière cyclique des signaux de capteur, le fonctionnement du convertisseur de commutation est en plus interrompu juste avant et pendant l'exploration des signaux de capteur.

2. Dispositif comprenant un convertisseur de commutation, qui comporte un interrupteur (S) commandé de manière séquentielle par un oscillateur (OS) et une bobine (L) mise en circuit en série, ce circuit série étant exploité sous tension continue, et le point de circuit commun à la bobine et à l'interrupteur étant raccordé, par l'intermédiaire d'au moins une diode (D1, D2), à au moins un condensateur tampon (C1, C2) fournissant une tension d'alimentation, caractérisé par une unité de commande électronique (µp) raccordée à la tension d'alimentation, et destinée à l'exploration de capteurs (F), et par une porte logique (UG), qui reçoit un signal de l'unité de commande électronique (µp), lors de l'exploration de capteurs, pour bloquer l'oscillateur (OS) qui commande de manière séquentielle l'interrupteur (S), en plus, juste avant et pendant l'exploration des signaux de capteur.

3. Dispositif selon la revendication 2, dans lequel les sorties de plusieurs comparateurs (K1, K2) surveillant la charge de plusieurs condensateurs tampon (C1, C2), sont regroupées par l'intermédiaire d'une porte logique OU (OG), caractérisé en ce que la porte logique est une porte logique ET (UG) à deux entrées, et en ce qu'à l'autre entrée de la porte logique ET, est amenée la sortie de la porte logique OU (OG).

4. Dispositif selon la revendication 3, caractérisé en ce que la porte logique OU (OG), la porte logique ET (UG) et l'oscillateur (OS) sont réalisés par le logiciel dans le microprocesseur (µp).
